# FASCICULE DE BREVET EUROPEEN

(11) **EP 3 464 954 B1**
(45) Date de publication et mention de la délivrance du brevet: **09.09.2020**
(21) Numéro de dépôt: 17742467.8
(22) Date de dépôt: 06.06.2017
(51) Int. Cl.: F16H 57/08, F16H 1/28

(54) **OUTILLAGE POUR LE DÉMONTAGE D'UN PORTE-SATELLITES EN DEUX PARTIES ET PORTE-SATELLITES ASSOCIÉ**
VORRICHTUNG ZUR DEMONTAGE EINES PLANETENTRÄGERS IN ZWEI TEILE UND ZUGEHÖRIGER PLANETENTRÄGER
EQUIPMENT FOR DISASSEMBLING A PLANET CARRIER INTO TWO PARTS AND ASSOCIATED PLANET CARRIER

(30) Priorité: 07.06.2016 FR 1655200
(43) Date de publication de la demande: 10.04.2019
(73) Titulaire: Safran Transmission Systems, 92700 Colombes (FR)
(72) Inventeur: DOMBEK, Alexis, 77550 MOISSY-CRAMAYEL (FR); LEMOINE, Julie, 77550 MOISSY-CRAMAYEL (FR)
(74) Mandataire: Regimbeau
(86) Numéro de dépôt international: PCT/FR2017/051424
(87) Numéro de publication internationale: WO 2017/212165

(56) Documents cités:
- WO-A2-2014/099087
- DE-A1-102010 051 942
- US-A1- 2014 031 163

## Description

### DOMAINE DE L'INVENTION

L'invention concerne le domaine des turbomachines, et plus particulièrement les réducteurs des turboréacteurs à double flux configurés pour introduire un rapport de réduction entre la vitesse de la soufflante et celle de la turbine basse pression.

### ARRIERE-PLAN TECHNOLOGIQUE

Un turboréacteur à double flux comprend généralement, d'amont en aval dans le sens de l'écoulement des gaz, une soufflante carénée et logée dans un carter de soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé dans l'arbre haute pression.

Afin d'améliorer le rendement propulsif du turboréacteur et de réduire sa consommation spécifique ainsi que le bruit émis par la soufflante, il a été proposé des turboréacteurs présentant un taux de dilution (« bypass ratio » en anglais, qui correspond au rapport entre le débit du flux primaire (chaud, qui traverse le corps primaire) et le débit du flux secondaire (froid) élevé. Par taux de dilution élevé, on comprendra ici un taux de dilution supérieur à 10, par exemple compris entre 12 et 18.

Pour atteindre de tels taux de dilution, un rapport de réduction est introduit entre la vitesse de la soufflante 2 et celle de la turbine basse pression 5b, permettant ainsi d'optimiser indépendamment leur vitesse de rotation respective. Cela peut notamment être réalisé à l'aide d'un réducteur tel qu'un mécanisme de réduction épicycloïdale ou planétaire, placé entre l'extrémité amont (par rapport au sens d'écoulement des gaz dans le turboréacteur) de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

On réduit ainsi la vitesse de rotation et le rapport de pression de la soufflante 2 (« fan pressure ratio » en anglais), ce qui permet d'augmenter la puissance extraite par la turbine basse pression 5b.

Un mécanisme de réduction comprend habituellement :
- un pignon solaire, centré sur l'axe principal du mécanisme de réduction, qui est entrainé par l'arbre basse pression (arbre d'entrée),
- une couronne, centrée sur l'axe principal,
- des satellites, placés entre le pignon solaire et la couronne, dont les dents coopèrent avec celles du pignon solaire et de la couronne, et
- un porte-satellites, sur lequel sont montés les satellites, généralement par l'intermédiaire de roulements.

Le porte-satellites peut être monobloc, ou en variante être en deux parties et comprendre une cage et un porte-cage connectés ensemble à l'aide d'axes de connexion qui sont frettés sur la cage. A cet effet, la cage comporte une série de montants (généralement cinq) répartis circonférentiellement autour de l'axe de révolution de la cage et comportant chacun un pontet interne et un pontet externe. Le pontet interne et le pontet externe sont séparés par un logement adapté pour recevoir un doigt associé du porte-cage. Le pontet interne, le pontet externe et le doigt comprennent chacun des orifices traversants coaxiaux qui s'étendent en regard lorsque la cage est montée sur le porte-cage. Afin de fixer la cage sur le porte-cage, un axe de connexion est introduit à travers ces orifices en étant fretté sur le pontet interne et le pontet externe de la cage. Une rotule est en outre interposée entre l'axe de connexion et les parois de l'orifice formé dans le doigt afin de découpler les déformations du porte-cage et de la cage.

Un porte-satellites en deux parties présente l'avantage de permettre des désalignements des axes des satellites assez faibles pour garantir le bon fonctionnement des engrènements. Toutefois, il s'avère que le démontage de la cage et du porte-cage est difficile à réaliser sans risquer d'endommager l'un au moins de ces éléments. En effet, l'extraction des axes de connexion afin de séparer la cage et le porte-cage requiert un effort d'extraction supérieur à 18 tonnes qui risque d'endommager le porte-satellites. Les dimensions du porte-satellites, et en particulier l'espace disponible entre la cage et le porte-cage, sont en outre très faibles voire insuffisants pour y placer les outillages conventionnels qui sont susceptible d'appliquer de tels efforts d'extraction.

Le document WO 2014/099087 décrit un procédé d'assemblage d'un mécanisme de réduction dans lequel on utilise un support unitaire comprenant un axe central qui comprend des parois espacées et des ouvertures espacées dans le sens de la circonférence ménagées sur une circonférence extérieure du support.

### RESUME DE L'INVENTION

Un objectif de l'invention est donc de proposer un outillage et un procédé pour le démontage d'un porte-satellites en deux parties d'un réducteur pour un turboréacteur à double flux qui permette, sans endommager le porte-satellites, de le démonter de manière simple et efficace.

Afin de permettre le démontage d'un porte-satellites pour un réducteur d'une turbomachine comprenant :
- une cage comprenant une première et une deuxième plateforme reliées entre elles par au moins un pontet interne et un pontet externe, ledit pontet interne et ledit pontet externe étant séparés par un logement, un premier orifice traversant étant formé dans le pontet interne et un deuxième orifice traversant étant formé dans le pontet externe, le premier orifice traversant et le deuxième orifice traversant étant coaxiaux,
- un porte-cage comprenant au moins un doigt configuré pour être introduit dans le logement défini entre le pontet interne et le pontet externe, un troisième orifice traversant étant formé dans le doigt de sorte que lorsque la cage est montée sur le porte-cage, le premier, le deuxième et le troisième orifice traversant sont coaxiaux, et
- un axe de connexion, logé dans le premier, le deuxième et le troisième orifice traversant de manière à maintenir la cage sur le porte-cage, l'invention propose un outillage comprenant :
- un vérin comprenant un corps et un piston, le piston étant configuré pour appliquer un effort sur l'axe de connexion, et
- un support configuré pour prendre appui sur le doigt lorsque le piston applique un effort sur l'axe de connexion.

Certaines caractéristiques préférées mais non limitatives de l'outillage sont les suivantes, prises individuellement ou en combinaison :
- le support comprend une première cale, configurée pour être placée entre le pontet externe et le doigt en étant en butée contre ledit doigt et une deuxième cale configurée pour être placée entre le pontet interne et le doigt en étant en butée contre ledit doigt,
- la première cale comprend une plaque sensiblement plane configurée pour venir en contact avec le doigt,
- la deuxième cale comprend une plaque en L comportant une première paroi sensiblement plane configurée pour venir en contact avec le doigt et une deuxième paroi, perpendiculaire à la première paroi et s'étendant le long de l'axe de connexion lorsque le piston applique un effort sur l'axe de connexion,
- la deuxième cale comprend en outre une embase présentant un logement configuré pour recevoir avec jeu le pontet interne lorsque le piston applique un effort sur l'axe de connexion, la première paroi de la plaque en L étant fixée sur l'embase,
- le vérin est configuré pour déplacer le piston du pontet externe vers le pontet interne,
- l'outillage comprend en outre au moins deux tirants, s'étendant de part et d'autre du piston et connectant le vérin au support, et
- chaque tirant comprend une tige comprenant une première extrémité fixée sur le vérin et une deuxième extrémité fixée sur le support par l'intermédiaire d'un bâti afin de reprendre les efforts appliqués par le piston du vérin sur le support lors de l'extraction de l'axe de connexion.

Selon un deuxième aspect, l'invention propose également un porte-satellites notamment pour un réducteur d'une turbomachine, ledit porte-satellites comprenant :
- une cage comprenant une première et une deuxième plateforme reliées entre elles par au moins un pontet interne et un pontet externe, ledit Regpontet interne et ledit pontet externe étant séparés par un logement, un premier orifice traversant étant formé dans le pontet interne et un deuxième orifice traversant étant formé dans le pontet externe, le premier orifice traversant et le deuxième orifice traversant étant coaxiaux,
- un porte-cage comprenant au moins un doigt configuré pour être introduit dans le logement défini entre le pontet interne et le pontet externe, un troisième orifice traversant étant formé dans le doigt de sorte que lorsque la cage est montée sur le porte-cage, le premier, le deuxième et le troisième orifice traversant sont coaxiaux, et
- un axe de connexion, logé dans le premier, le deuxième et le troisième orifice traversant de manière à maintenir la cage sur le porte-cage.

Le doigt du porte-cage comprend en outre un premier méplat s'étendant autour du troisième orifice du doigt et configuré pour coopérer avec le support d'un outillage comme décrit ci-dessus lorsque le piston applique un effort sur l'axe de connexion du porte-satellites.

De manière optionnelle, le porte-satellites comprend en outre un deuxième méplat, s'étendant autour du deuxième orifice du pontet externe, configuré pour coopérer avec ledit support de l'outillage lorsque le piston applique un effort sur l'axe de connexion dudit porte-satellites.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

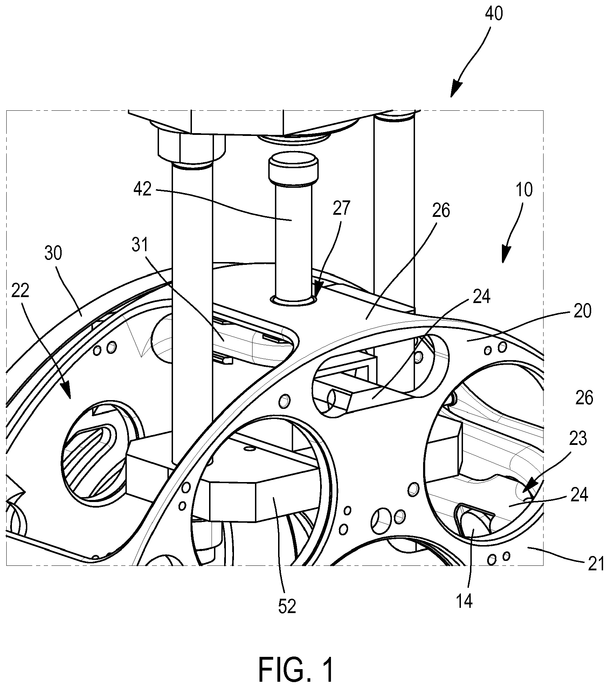

La figure 1 est une vue en perspective d'un exemple de réalisation d'un outillage pour le démontage d'un porte-satellites conforme à l'invention, l'outillage étant fixé sur le porte-satellites et prêt à extraire un axe de connexion dudit porte-satellites,
La figure 2a est une vue en perspective de l'outillage et du porte-satellites de la figure 1, sur laquelle la cage du porte-satellites a été omise,
La figure 2b est une vue en coupe de l'outillage et du porte-satellites de la figure 1,
La figure 3 est une vue en perspective de l'outillage de la figure 1,
La figure 4a est une vue en perspective d'un exemple de réalisation d'un doigt d'un porte-cage d'un porte-satellites conforme à l'invention,
La figure 4b est une vue en perspective d'un exemple de réalisation d'un pontet externe d'une cage d'un porte-satellites conforme à l'invention, et

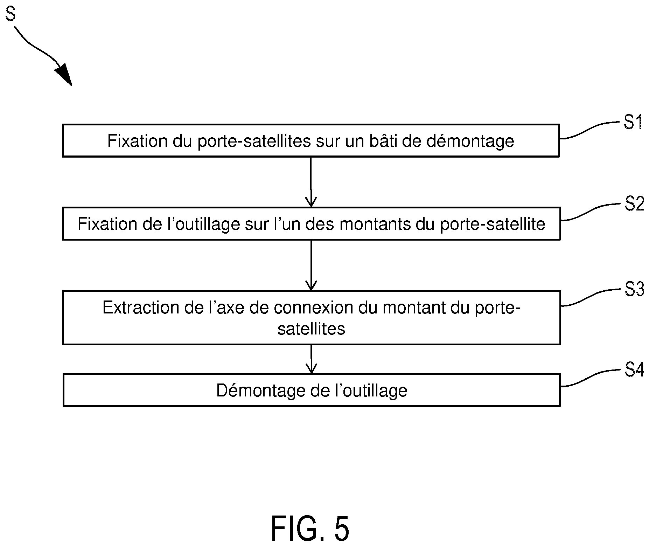

La figure 5 est un organigramme illustrant différentes étapes de l'extraction d'un axe de connexion d'un porte-satellites à l'aide d'un outillage conforme à un mode de réalisation de l'invention.

### DESCRIPTION DETAILLEE D'UN MODE DE REALISATION

Dans ce qui suit, l'invention va plus particulièrement être décrite dans le cadre du montage d'un mécanisme de réduction épicycloïdal comprenant :
- un pignon solaire, centré sur un axe de révolution du mécanisme de réduction,
- une couronne, centrée sur l'axe de révolution du mécanisme de réduction,
- au moins trois satellites configurés pour coopérer avec le pignon solaire et la couronne, par exemple cinq, et
- un porte-satellites 10 dans lequel sont montés en rotation les satellites autour d'un axe fixe, sensiblement parallèle à l'axe principal X du mécanisme de réduction 10.

Le pignon solaire est configuré pour recevoir un arbre d'entrée, typiquement l'arbre basse pression d'un turboréacteur à double flux.

Le porte-satellites 10 est en deux parties et comprend à cet effet une cage 20 montée sur un porte-cage 30 à l'aide d'axes de connexion 14 qui sont frettés sur la cage.

La cage comprend une première et une deuxième plateforme 21, 22 planes et sensiblement parallèles définissant entre elles un espace interne configuré pour recevoir le pignon solaire et les satellites.

Comme décrit précédemment, la première et la deuxième plateforme 21, 22 sont fixées ensemble à l'aide d'une série de montants 23 (généralement autant que de satellites, par exemple cinq) comprenant chacun un pontet interne 24 et un pontet externe 26 séparés par un logement adapté pour recevoir un doigt 31 associé du porte-cage 30. Le pontet interne 24, le pontet externe 26 et le doigt 31 comprennent chacun un orifice traversant 25, 27 et 32, respectivement, lesdits orifices traversants 25, 27, 32 s'étendant en regard lorsque la cage 20 est montée sur le porte-cage 30 et étant configurés pour recevoir l'un des axes de connexion 14. Afin de fixer la cage 20 sur le porte-cage 30, un axe de connexion 14 est introduit dans les trois orifices 25, 27, 32 en étant fretté sur le pontet interne 24 et le pontet externe 26. Une rotule 16 est en outre fixée dans l'orifice traversant 32 formé dans le doigt 31 et traversée par l'axe de connexion 14 avec ajustement glissant afin de découpler les déformations du porte-cage 30 et de la cage 20.

Chaque axe de connexion 14 comprend une tige configurée pour être logée dans les orifices traversants 25, 27 et 32, et une tête 15 configurée pour prendre appui sur une face interne du pontet interne 24. Le diamètre externe de la tige de l'axe 14 est sensiblement égal au diamètre interne des orifices traversants 25, 27 formés dans les pontets 24, 26 afin de garantir son frettage sur le pontet interne 24 et sur le pontet externe 26. Le diamètre de l'orifice 32 formé dans le doigt 31 est en revanche plus grand afin de pouvoir y interposer la rotule 16.

Le cas échéant, le porte-satellites 10 peut en outre comprendre un anneau d'arrêt, configuré pour retenir l'axe de connexion 14 dans le cas où son frettage est défectueux.

Afin de permettre le démontage d'un tel porte-satellites 10, l'invention propose un outillage 40 permettant d'extraire successivement les axes de connexion 14 sans endommager le porte-satellites 10 et comprenant :
- un vérin 41 comprenant un corps et un piston 42, le piston 42 étant configuré pour appliquer un effort sur l'axe de connexion 14, et
- un support 43 configuré pour prendre appui sur le doigt 31 lorsque le piston 42 applique un effort sur l'axe de connexion 14.

Le support 43 permet de réduire les déplacements du doigt 31, du pontet interne 24 et du pontet externe 26 lors de l'extraction de l'axe de connexion 14 et de reprendre les efforts, importants, qui sont appliqués sur l'axe de connexion 14. Celui-ci étant fretté, il est en effet nécessaire que le vérin 41 lui applique un effort supérieur à 18 tonnes. De plus, en prenant appui sur le porte-satellites 10 directement (et plus précisément, sur le doigt 31 du porte-cage 30 et sur la cage), l'encombrement de l'outillage 40 est fortement limité et peut s'intégrer dans l'ensemble qui dispose de peu d'espace.

Le vérin 41 est configuré de manière à appliquer un effort sur l'axe de connexion 14 suivant une direction sensiblement coaxiale avec les orifices 25, 27 et 32 de la cage 20 et du porte-cage 30, de l'extérieur vers l'intérieur (c'est-à-dire du pontet externe 26 vers le pontet interne 24), l'axe de connexion 14 comportant une tête en butée contre la face interne du pontet interne 24.

L'outillage 40 comprend en outre au moins deux tirants 50, s'étendant de part et d'autre du piston 42 et connectant le vérin 41 au support 43. Par exemple, chaque tirant 50 peut comprendre une tige 51 comprenant une première extrémité, fixée sur le vérin 41, et une deuxième extrémité, fixée sur le support 43 par l'intermédiaire d'un bâti 52 afin de reprendre les efforts appliqués par le piston 42 du vérin 41 sur le support 43 lors de l'extraction de l'axe de connexion 14. La distance entre le vérin 41 et le bâti 52 des tirants 50 peut être ajustée en rapprochant ou en éloignant le bâti 52. Par exemple, le bâti 52 peut comprendre deux trous traversants à travers lesquels sont introduites les tiges 51 des tirants 50, tandis que les tiges 51 peuvent être filetées et comprendre un écrou 53 au niveau de leur deuxième extrémité. De la sorte, le vissage ou le dévissage des écrous 53 a pour effet de rapprocher ou d'éloigner le bâti 52 de la première extrémité des tiges 51.

L'outillage 40 peut notamment comprendre un socle configuré pour être fixé sur un bâti de démontage. Avantageusement, la cage 20 et le porte-cage 30 du porte-satellites 10 sont alors également fixés sur le bâti de démontage.

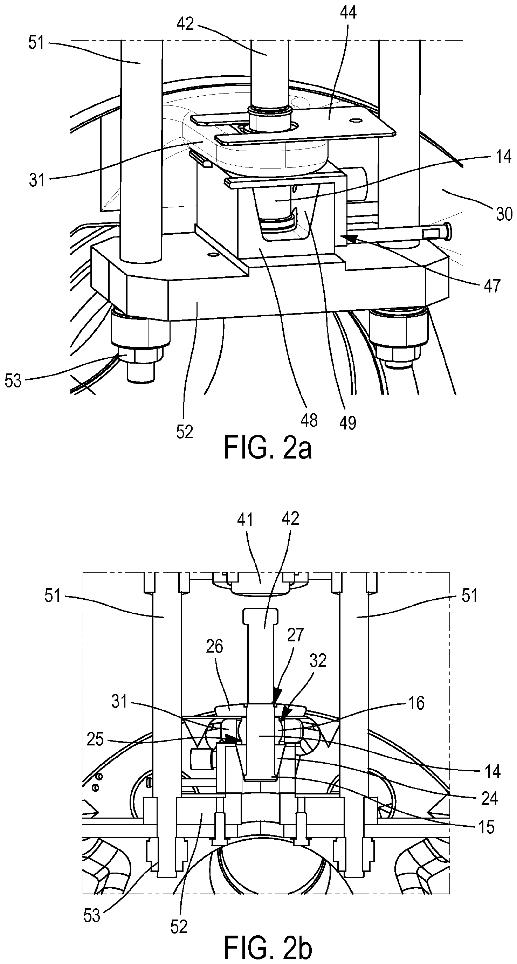

Le support 43 peut comprendre une première cale 44, configurée pour être placée entre le pontet externe 26 et le doigt 31 en étant en butée contre ledit doigt 31, et une deuxième cale 46 configurée pour être placée entre le pontet interne 24 et le doigt 31 en étant en butée contre ledit doigt 31 (voir figures 2a et 2b).

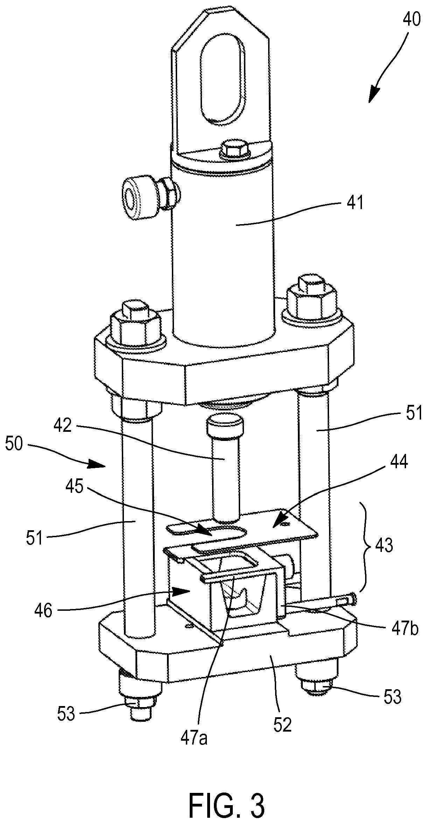

La première cale 44 peut notamment comprendre une plaque rigide sensiblement plane configurée pour venir en contact avec la face externe du doigt 31 qui s'étend en regard du pontet externe 26 (voir figures 2a et 3). La plaque 44 peut par exemple être réalisée en métal. Dans une forme de réalisation, la plaque 44 est fixée sur l'une des tiges 51 formant les tirants 50 de l'outillage 40. Ici, la plaque 44 est fixe par rapport à cette tige 51.

La plaque 44 peut comprendre une fente 45 configurée pour recevoir avec jeu de l'axe de connexion 14 et le piston 42 du vérin 41, afin de ne pas gêner l'extraction de l'axe. De préférence, un jeu d'au moins un centimètre sur toute la périphérie de l'axe est prévu.

De manière analogue, la deuxième cale 46 peut également comprendre une plaque rigide sensiblement plane, fixée sur l'une des tiges 51 formant les tirants 50 de l'outillage 40.

En variante, comme illustré sur les figures 2a, 2b et 3, la deuxième cale 46 peut comprendre une plaque rigide en forme de L et une embase 48. Plus précisément, la plaque en forme de L peut être métallique et comporter une première paroi 47a configurée pour venir en contact avec le doigt 31 et une deuxième paroi 47b s'étendant perpendiculairement de la première paroi 47a, le long de l'axe de connexion 14.

L'embase 48 quant à elle comprend une face plane configurée pour supporter la première paroi 47a de la plaque 47 en L et au moins une paroi latérale configurée pour supporter la deuxième paroi 47b de la plaque 47 en L. La plaque 47 en L et l'embase 48 sont donc solidaires en déplacement. Un logement 49, configuré pour recevoir avec jeu le pontet interne 24 lorsque le piston 42 applique un effort sur l'axe de connexion 14, est en outre délimité entre la face plane et la paroi latérale. La première paroi 47a de la plaque en forme de L est ensuite appliquée afin de former un appui entre le pontet interne 24 et le doigt 31.

Dans une forme de réalisation, l'embase 48 est fixée sur le bâti 52 des tirants 50. Le déplacement du bâti 52 (en vue de le rapprocher ou de l'éloigner du vérin 41) a donc pour effet de déplacer l'embase 48 et la plaque 47 en L de la deuxième cale 46.

Ici, l'embase 48 présente un socle sensiblement rectangulaire et deux parois latérales sensiblement parallèles et opposées. L'extrémité des parois latérales qui est opposée au socle est sensiblement plane et forme la face plane configurée pour supporter la première paroi 47a de la plaque 47 en L. Les parois latérales présentent chacune une face interne qui définissent le logement 49. Dans un mode de réalisation, la forme des faces interne peut être complémentaire de la forme du pontet interne 24 destiné à être reçu dans le logement de l'embase 48. Par exemple, lorsque le pontet interne 24 est sensiblement tronconique, les faces internes définissent un logement 49 tronconique complémentaire. On notera toutefois que l'embase 48 est configurée de sorte que ces faces internes ne viennent pas en contact avec le pontet interne 24 lors de l'extraction de l'axe de connexion 14, afin de ne pas créer de contraintes supplémentaires sur la cage 20.

Afin de réduire les risques d'endommagement du porte-cage 30 et de la cage 20 lors de l'extraction de l'axe de connexion 14, le porte-cage 30 et/ou la cage 20 peuvent être renforcés localement pour mieux reprendre les efforts transmis par l'outillage 40.

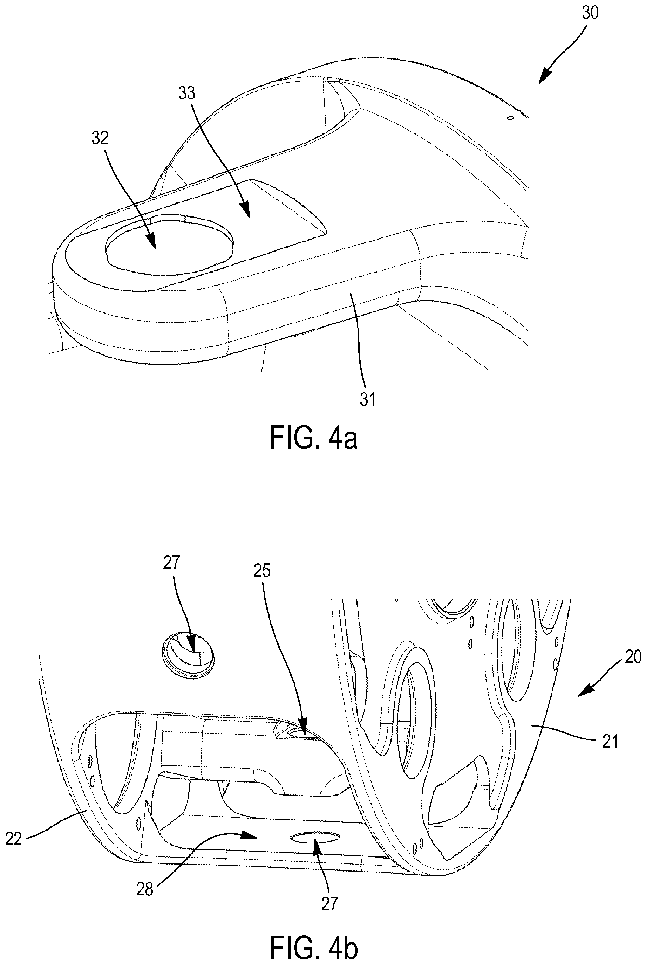

En particulier, comme visible sur la figure 4a, le porte-cage 30 peut comprendre un premier méplat 33 s'étendant autour de l'orifice 32 du doigt 31 et configuré pour coopérer avec le support 43 de l'outillage 40 lorsque le piston 42 applique un effort sur l'axe de connexion 14 du porte-satellites 10. Par méplat 33, on comprendra ici une surface sensiblement plane formée autour de l'orifice 32. Le méplat 33 forme ainsi un appui surfacique capable de mieux répartir les efforts appliqués par l'outillage 40 via la première cale 44.

La cage 20 peut également comprendre un deuxième méplat 28 s'étendant autour de l'orifice 27 formé dans le pontet externe 26 et configuré pour coopérer avec le support 43 de l'outillage 40 lorsque le piston 42 applique un effort sur l'axe de connexion 14 du porte-satellites 10. Ici encore, comme visible sur la figure 4b, le méplat 28 comprend une surface sensiblement plane formée autour de l'orifice 27. Le méplat 28 forme ainsi un appui surfacique capable de mieux répartir les efforts appliqués par l'outillage 40 via la deuxième cale 46.

De tels méplats 33, 28 peuvent notamment être réalisés par fraisage de la surface externe du doigt 31 et/ou du pontet externe 26.

On notera que, en plus d'améliorer la répartition surfacique des efforts appliqués par l'outillage 40 sur le porte-cage 30 et/ou la cage 20, les méplats 33, 28 présentent l'avantage de dégager localement l'espace disponible pour l'introduction de l'outillage 40 dans le porte-satellites 10.

Un exemple de procédé de démontage d'un porte-satellites 10 à l'aide d'un outillage 40 conforme à l'invention va à présent être décrit.

Au cours d'une première étape S1, le porte-satellites 10 peut tout d'abord être fixé sur un bâti de démontage par tout moyen adapté. Le cas échéant, lorsque le porte-satellites 10 comporte des anneaux d'arrêt, ceux-ci peuvent être retirés afin de débloquer les axes de connexion 14. En variante, les anneaux d'arrêt pourraient également être retirés après l'étape S2.

Au cours d'une deuxième étape S2, l'outillage 40 peut être amené sur le porte-satellites 10 et être fixé en position d'extraction sur le bâti de démontage. A cet effet, l'outillage 40 peut être fixé de sorte que :
- le support 43 est placé en butée contre l'un des doigts 31 du porte-cage 30 du porte-satellites 10, et
- le piston 42 du vérin 41 est coaxial avec l'orifice 27 formé dans le pontet externe 26 (qui est lui-même coaxial avec les orifices 25 et 31 formés dans le pontet interne 24 et le doigt 31).

Ainsi, dans l'exemple de réalisation illustré sur les figures, la première cale 44 du support 43 est insérée entre le méplat 28 du pontet externe 26 et le méplat 33 du doigt 31 de manière à venir en contact avec toute la surface des méplats 28, 33 et assurer ainsi une bonne répartition des efforts appliqués par l'outillage 40.

Puis, dans un deuxième temps, la deuxième cale 46 est amenée vers le doigt 31 côté pontet interne 24 en rapprochant le bâti 52 des tirants 50, par exemple par vissage des écrous 53, jusqu'à ce que le pontet interne 24 soit reçu dans le logement 49 de l'embase 48 de la deuxième cale 46 et que la première paroi 47a de la plaque 47 en L se trouve en butée contre le doigt 31. Dans cette configuration, l'outillage 40 est alors bridé sur le porte-satellites 10 et est prêt à extraire l'axe de connexion 14. On pourra notamment se référer aux figures 2a et 2b, qui illustrent l'outillage 40 en configuration bridée. Sur la figure 2b (comme sur la figure 3), le vérin 41 est illustré en vue éclatée : on comprendra bien entendu que le piston 42 est en pratique solidaire du vérin 41.

Au cours d'une troisième étape S3, le vérin 41 est alors actionné de manière à pousser l'axe de connexion 14 de l'extérieur vers l'intérieur du porte-satellites 10 afin d'extraire l'axe 14 des orifices 25, 27 et 33 formés dans le pontet interne 24, le pontet externe 25 et le doigt 31, respectivement.

De manière optionnelle, les orifices 25, 27 et 33 peuvent être lubrifiés préalablement à l'extraction de l'axe de connexion 14 afin de faciliter le démontage et de réduire l'effort à appliquer par l'outillage 40 au cours de cette troisième étape S3.

Au cours d'une quatrième étape S4, l'outillage 40 peut alors être démonté. Pour cela, les écrous 53 peuvent par exemple être dévissés afin d'éloigner la deuxième cale 46 et de relâcher le pontet interne 24, le pontet externe 26 et le doigt 31.

La deuxième S2, la troisième S3 et la quatrième S4 étape peuvent ensuite être réitérées pour l'ensemble des montants 23 du porte-satellites 10, afin d'extraire successivement tous les axes de connexion 14.

Lorsque tous les axes de connexion 14 sont extraits, il est alors possible de séparer la cage 20 et le porte-cage 30.

## Revendications

1. Outillage (40) pour le démontage d'un porte-satellites (14), ledit porte-satellites (14) comprenant :
- une cage (20) comprenant une première et une deuxième plateforme (21, 22) reliées entre elles par au moins un pontet interne (24) et un pontet externe (26), ledit pontet interne (24) et ledit pontet externe (26) étant séparés par un logement, un premier orifice (25) traversant étant formé dans le pontet interne (24) et un deuxième orifice (27) traversant étant formé dans le pontet externe (26), le premier orifice (25) traversant et le deuxième orifice (27) traversant étant coaxiaux,
- un porte-cage (30) comprenant au moins un doigt (31) configuré pour être introduit dans le logement défini entre le pontet interne (24) et le pontet externe (26), un troisième orifice (32) traversant étant formé dans le doigt (31) de sorte que lorsque la cage (20) est montée sur le porte-cage (30), le premier, le deuxième et le troisième orifice (25, 27, 32) traversant sont coaxiaux, et
- un axe de connexion (14), logé dans le premier, le deuxième et le troisième orifice (32) traversant de manière à maintenir la cage (20) sur le porte-cage (30),
l'outillage (40) étant **caractérisé en ce qu'**il comprend :
- un vérin (41) comprenant un corps et un piston (42), le piston (42) étant configuré pour appliquer un effort sur l'axe de connexion (14), et
- un support (43) configuré pour prendre appui sur le doigt (31) lorsque le piston (42) applique un effort sur l'axe de connexion (14).

2. Outillage (40) selon la revendication 1, dans lequel le support (43) comprend :
- une première cale (44), configurée pour être placée entre le pontet externe (26) et le doigt (31) en étant en butée contre ledit doigt (31), et
- une deuxième cale (46) configurée pour être placée entre le pontet interne (24) et le doigt (31) en étant en butée contre ledit doigt (31).

3. Outillage (40) selon la revendication 2, dans lequel la première cale (44) comprend une plaque sensiblement plane configurée pour venir en contact avec le doigt (31).

4. Outillage (40) selon l'une des revendications 2 ou 3, dans lequel la deuxième cale (46) comprend une plaque (47) en L comportant une première paroi (47a) sensiblement plane configurée pour venir en contact avec le doigt (31) et une deuxième paroi (47b), perpendiculaire à la première paroi (47a) et s'étendant le long de l'axe de connexion (14) lorsque le piston (42) applique un effort sur l'axe de connexion (14).

5. Outillage (40) selon la revendication 4, dans lequel la deuxième cale (46) comprend en outre une embase (48) présentant un logement (49) configuré pour recevoir avec jeu le pontet interne (24) lorsque le piston (42) applique un effort sur l'axe de connexion (14), la première paroi (47a) de la plaque en L (47) étant fixée sur l'embase (48).

6. Outillage (40) selon l'une des revendications 1 à 5, dans lequel le vérin (41) est configuré pour déplacer le piston (42) du pontet externe (26) vers le pontet interne (24).

7. Outillage (40) selon l'une des revendications 1 à 6, comprenant en outre au moins deux tirants (50), s'étendant de part et d'autre du piston (42) et connectant le vérin (41) au support (43).

8. Outillage (40) selon la revendication 7, dans lequel chaque tirant (50) comprend une tige (51) comprenant une première extrémité fixée sur le vérin (41) et une deuxième extrémité fixée sur le support (43) par l'intermédiaire d'un bâti (52) afin de reprendre les efforts appliqués par le piston (42) du vérin (41) sur le support (43) lors de l'extraction de l'axe de connexion (14).

9. Porte-satellites (14), notamment pour un réducteur (10) d'une turbomachine, ledit porte-satellites (14) comprenant :
- une cage (20) comprenant une première et une deuxième plateforme (21, 22) reliées entre elles par au moins un pontet interne (24) et un pontet externe (26), ledit pontet interne (24) et ledit pontet externe (26) étant séparés par un logement, un premier orifice (25) traversant étant formé dans le pontet interne (24) et un deuxième orifice (27) traversant étant formé dans le pontet externe (26), le premier orifice (25) traversant et le deuxième orifice (27) traversant étant coaxiaux,
- un porte-cage (30) comprenant au moins un doigt (31) configuré pour être introduit dans le logement défini entre le pontet interne (24) et le pontet externe (26), un troisième orifice (32) traversant étant formé dans le doigt (31) de sorte que lorsque la cage (20) est montée sur le porte-cage (30), le premier, le deuxième et le troisième orifice (32) traversant sont coaxiaux, et
- un axe de connexion (14), logé dans le premier, le deuxième et le troisième orifice (32) traversant de manière à maintenir la cage (20) sur le porte-cage (30),
le porte-satellites (14) étant **caractérisé en ce que** le doigt (31) du porte-cage (30) comprend en outre un premier méplat (33), s'étendant autour du troisième orifice (32) du doigt (31), configuré pour coopérer avec le support (43) d'un outillage (40) selon l'une des revendications 1 à 8 lorsque le piston (42) applique un effort sur l'axe de connexion (14) dudit porte-satellites (14).

10. Porte-satellites selon la revendication 9, comprenant en outre un deuxième méplat (28), s'étendant autour du deuxième orifice (27) du pontet externe (26), configuré pour coopérer avec ledit support (43) de l'outillage (40) lorsque le piston (42) applique un effort sur l'axe de connexion (14) dudit porte-satellites (14).

## Patentansprüche

1. Werkzeug (40) für die Demontage eines Satellitenträgers (14), wobei der Satellitenträger (14) umfasst:
- einen Käfig (20), der eine erste und eine zweite Plattform (21, 22) umfasst, die durch mindestens einen inneren Steg (24) und einen äußeren Steg (26) miteinander verbunden sind, wobei der innere Steg (24) und der äußere Steg (26) durch eine Aufnahme getrennt sind, wobei eine erste Durchgangsöffnung (25) in dem inneren Steg (24) gebildet ist und eine zweite Durchgangsöffnung (27) in dem äußeren Steg (26) gebildet ist, wobei die erste Durchgangsöffnung (25) und die zweite Durchgangsöffnung (27) koaxial sind,
- einen Käfigträger (30), der mindestens einen Finger (31) umfasst, der so ausgestaltet ist, dass er in die Aufnahme eingesetzt werden kann, die zwischen dem inneren Steg (24) und dem äußeren Steg (26) definiert ist, wobei eine dritte Durchgangsöffnung (32) in dem Finger (31) gebildet ist, sodass, wenn der Käfig (20) auf dem Käfigträger (30) montiert ist, die erste, die zweite und die dritte Durchgangsöffnung (25, 27, 32) koaxial sind, und
- eine Verbindungsachse (14), die in der ersten, der zweiten und der dritten Durchgangsöffnung (32) so untergebracht ist, dass der Käfig (20) auf dem Käfigträger (30) gehalten wird,
wobei das Werkzeug (40) **dadurch gekennzeichnet ist, dass** es umfasst:
- einen Zylinder (41), der einen Körper und einen Kolben (42) umfasst, wobei der Kolben (42) so ausgestaltet ist, dass er eine Kraft auf die Verbindungsachse (14) ausübt, und
- eine Halterung (43), die so ausgestaltet ist, dass sie auf dem Finger (31) aufliegt, wenn der Kolben (42) eine Kraft auf die Verbindungsachse (14) ausübt.

2. Werkzeug (40) nach Anspruch 1, wobei die Halterung (43) umfasst:
- eine erste Unterlage (44), die so ausgestaltet ist, dass sie zwischen dem äußeren Steg (26) und dem Finger (31) platziert werden kann, indem sie gegen den Finger (31) anschlägt, und
- eine zweite Unterlage (46), die so ausgestaltet ist, dass sie zwischen dem inneren Steg (24) und dem Finger (31) platziert werden kann, indem sie gegen den Finger (31) anschlägt.

3. Werkzeug (40) nach Anspruch 2, wobei die erste Unterlage (44) eine im Wesentlichen ebene Platte umfasst, die ausgestaltet ist, mit dem Finger (31) in Kontakt zu kommen.

4. Werkzeug (40) nach einem der Ansprüche 2 oder 3, wobei die zweite Unterlage (46) eine L-förmige Platte (47) umfasst, die eine im Wesentlichen ebene erste Wand (47a), die ausgestaltet ist, mit dem Finger (31) in Kontakt zu kommen, und eine zweite Wand (47b) umfasst, die senkrecht zu der ersten Wand (47a) verläuft und sich entlang der Verbindungsachse (14) erstreckt, wenn der Kolben (42) eine Kraft auf die Verbindungsachse (14) ausübt.

5. Werkzeug (40) nach Anspruch 4, wobei die zweite Unterlage (46) des Weiteren einen Sockel (48) umfasst, der eine Aufnahme (49) aufweist, die ausgestaltet ist, den inneren Steg (24) mit Spiel aufzunehmen, wenn der Kolben (42) eine Kraft auf die Verbindungsachse (14) ausübt, wobei die erste Wand (47a) der L-förmigen Platte (47) auf dem Sockel (48) fixiert ist.

6. Werkzeug (40) nach einem der Ansprüche 1 bis 5, wobei der Zylinder (41) ausgestaltet ist, den Kolben (42) vom äußeren Steg (26) zum inneren Steg (24) zu verschieben.

7. Werkzeug (40) nach einem der Ansprüche 1 bis 6, umfassend des Weiteren mindestens zwei Zuganker (50), die sich auf beiden Seiten des Kolbens (42) erstrecken und den Zylinder (41) mit der Halterung (43) verbinden.

8. Werkzeug (40) nach Anspruch 7, wobei jeder Zuganker (50) einen Stab (51) umfasst, der ein erstes Ende, das auf dem Zylinder (41) fixiert ist, und ein zweites Ende umfasst, das auf der Halterung (43) mittels eines Gestells (52) fixiert ist, um die von dem Kolben (42) des Zylinders (41) auf die Halterung (43) ausgeübten Kräfte beim Herausnehmen der Verbindungsachse (14) aufzunehmen.

9. Satellitenträger (14), insbesondere für ein Getriebe (10) einer Turbomaschine, wobei der Satellitenträger (14) umfasst:
- einen Käfig (20), der eine erste und eine zweite Plattform (21, 22) umfasst, die durch mindestens einen inneren Steg (24) und einen äußeren Steg (26) miteinander verbunden sind, wobei der innere Steg (24) und der äußere Steg (26) durch eine Aufnahme getrennt sind, wobei eine erste Durchgangsöffnung (25) in dem inneren Steg (24) gebildet ist und eine zweite Durchgangsöffnung (27) in dem äußeren Steg (26) gebildet ist, wobei die erste Durchgangsöffnung (25) und die zweite Durchgangsöffnung (27) koaxial sind,
- einen Käfigträger (30), der mindestens einen Finger (31) umfasst, der so ausgestaltet ist, dass er in die Aufnahme eingesetzt werden kann, die zwischen dem inneren Steg (24) und dem äußeren Steg (26) definiert ist, wobei eine dritte Durchgangsöffnung (32) in dem Finger (31) gebildet ist, sodass, wenn der Käfig (20) auf dem Käfigträger (30) montiert ist, die erste, die zweite und die dritte Durchgangsöffnung (32) koaxial sind, und
- eine Verbindungsachse (14), die in der ersten, der zweiten und der dritten Durchgangsöffnung (32) so untergebracht ist, dass der Käfig (20) auf dem Käfigträger (30) gehalten wird,
wobei der Satellitenträger (14) **dadurch gekennzeichnet ist, dass** der Finger (31) des Käfigträgers (30) des Weiteren eine erste Abflachung (33) umfasst, die sich um die dritte Öffnung (32) des Fingers (31) erstreckt, die ausgestaltet ist, mit der Halterung (43) eines Werkzeugs (40) nach einem der Ansprüche 1 bis 8 zusammenzuwirken, wenn der Kolben (42) eine Kraft auf die Verbindungsachse (14) des Satellitenträgers (14) ausübt.

10. Satellitenträger nach Anspruch 9, umfassend des Weiteren eine zweite Abflachung (28), die sich um die zweite Öffnung (27) des äußeren Stegs (26) erstreckt, die ausgestaltet ist, mit der Halterung (43) des Werkzeugs (40) zusammenzuwirken, wenn der Kolben (42) eine Kraft auf die Verbindungsachse (14) des Satellitenträgers (14) ausübt.

## Claims

1. Tool set (40) for disassembling a planet carrier (14), said planet carrier (14) comprising:
- a cage (20) comprising a first and a second platform (21, 22) connected together by at least one internal saddle (24) and one external saddle (26), said internal saddle (24) and said external saddle (26) being separated by a housing, a first through opening (25) being formed in the internal saddle (24) and a second through opening (27) being formed in the external saddle (26), the first through opening (25) and the second through opening (27) being coaxial,
- a cage carrier (30) comprising at least one finger (31) configured to be introduced into the housing defined between the internal saddle (24) and the external saddle (26), a third through opening (32) being formed in the finger (31) so that when the cage (20) is mounted on the cage carrier (30), the first, the second and the third through openings (25, 27, 32) are coaxial, and
- a connection axle (14), accommodated in the first, the second and the third through openings (32) so as to retain the cage (20) on the cage carrier (30), the tool set (40) being **characterised in that** it comprises:
- a cylinder (41) comprising a body and a piston (42), the piston (42) being configured to apply a force to the connection axle (14), and
- a support (43) configured to be supported on the finger (31) when the piston (42) applies a force to the connection axle (14).

2. Tool set (40) according to claim 1, wherein the support (43) comprises:
- a first shim (44), configured to be placed between the external saddle (26) and the finger (31) while being in abutment against said finger (31), and
- a second shim (46) configured to be placed between the internal saddle (24) and the finger (31) while being in abutment against said finger (31).

3. Tool set (40) according to claim 2, wherein the first shim (44) comprises a substantially flat plate configured to come into contact with the finger (31).

4. Tool set (40) according to one of claims 2 or 3, wherein the second shim (46) comprises an L-shaped plate (47) including a first substantially flat wall (47a) configured to come into contact with the finger (31), and a second wall (47b), perpendicular to the first wall (47a) and extending along the connection axle (14) when the piston (42) applies a force to the connection axle (14).

5. Tool set (40) according to claim 4, wherein the second shim (46) further comprises a baseplate (48) having a housing (49) configured to receive with clearance the internal saddle (24) when the piston (42) applies a force to the connection axle (14), the first wall (47a) of the L-shaped plate (47) being attached to the baseplate (48).

6. Tool set (40) according to one of claims 1 to 5, wherein the cylinder (41) is configured to move the piston (42) from the external saddle (26) to the internal saddle (24).

7. Tool set (40) according to one of claims 1 to 6, further comprising at least two anchors (50), extending on either side of the piston (42) and connecting the cylinder (41) to the support (43).

8. Tool set (40) according to claim 7, wherein each anchor (50) comprises a rod (51) comprising a first end attached to the cylinder (41) and a second end attached to the support (43) by means of a frame (52) so as to take up the forces applied by the piston (42) of the cylinder (41) to the support (43) during the extraction of the connection axle (14).

9. Planet carrier (14), particularly for a reduction mechanism (10) of a turbomachine, said planet carrier (14) comprising:
- a cage (20) comprising a first and a second platform (21, 22) connected together by at least one internal saddle (24) and one external saddle (26), said internal saddle (24) and said external saddle (26) being separated by a housing, a first through opening (25) being formed in the internal saddle (24) and a second through opening (27) being formed in the external saddle (26), the first through opening (25) and the second through opening (27) being coaxial,
- a cage carrier (30) comprising at least one finger (31) configured to be introduced into the housing defined between the internal saddle (24) and the external saddle (26), a third through opening (32) being formed in the finger (31) so that when the cage (20) is mounted on the cage carrier (30), the first, the second and the third through openings (32) are coaxial, and
- a connection axle (14), accommodated in the first, the second and the third through openings (32) so as to retain the cage (20) on the cage carrier (30),
the planet carrier (14) being **characterised in that** the finger (31) of the cage carrier (30) further comprises a first flat (33) extending around the third opening (32) of the finger (31), configured to cooperate with the support (43) of a tool set (40) according to one of claims 1 to 8 when the piston (42) applies a force to the connection axle (14) of said planet carrier (14).

10. Planet carrier according to claim 9, further comprising a second flat (28) extending around the second opening (27) of the external saddle (26), configured to cooperate with said support (43) of the tool set (40) when the piston (42) applies a force to the connection axle (14) of said planet carrier (14).
